# EUROPÄISCHE PATENTSCHRIFT

(11) **EP 2 699 388 B1**
(45) Veröffentlichungstag und Bekanntmachung des Hinweises auf die Patenterteilung: **06.05.2020**
(21) Anmeldenummer: 12716415.0
(22) Anmeldetag: 23.04.2012
(51) Int. Cl.: F16B 35/00, B25B 13/06, B25B 13/48, F16B 23/00

(54) **ANZIEHWERKZEUG FÜR EIN SCHRAUBELEMENT MIT EINER LEITUNG SOWIE KOPPLUNGSTEIL UND SCHRAUBELEMENT**
TIGHTENING TOOL FOR A SCREW ELEMENT HAVING A LINE, AND COUPLING PART AND SCREW ELEMENT
OUTIL DE SERRAGE POUR UN ÉLÉMENT À VISSER ASSOCIÉ À UNE CONDUITE AINSI QUE PIÈCE D'ACCOUPLEMENT ET ÉLÉMENT À VISSER

(30) Priorität: 21.04.2011 DE 102011018465
(43) Veröffentlichungstag der Anmeldung: 26.02.2014
(73) Patentinhaber: LABOMATIC INSTRUMENTS AG, CH-4123 ALLSCHWIL (CH)
(72) Erfinder: MARCHAND, Claude Louis, CH-4434 Hölstein (CH)
(74) Vertreter: Manitz Finsterwald Patent- und Rechtsanwaltspartnerschaft mbB
(86) Internationale Anmeldenummer: PCT/EP2012/057410
(87) Internationale Veröffentlichungsnummer: WO 2012/143569

(56) Entgegenhaltungen:
- WO-A1-87/00352
- GB-A- 1 458 090
- GB-A- 2 390 047
- US-A- 5 378 101
- US-A1- 2004 035 259
- US-A1- 2006 068 623

## Beschreibung

Die vorliegende Erfindung betrifft ein Anziehwerkzeug für ein Schraubelement mit einer Werkzeugaufnahme und einer zugeordneten Leitung sowie ein Kopplungsteil für das Anziehwerkzeug und ein zur Zusammenarbeit mit dem Kopplungsteil bzw. Anziehwerkzeug ausgebildetes Schraubelement.

Schraubelemente, die der Befestigung einer Leitung an einem Gegenstück dienen, sei es an ein Verbindungsteil zu einer weiteren Leitung oder zu einem Anschluss an ein Gehäuse eines Gerätes oder an einer pneumatischen oder hydraulischen Einrichtung, sind in großer Vielfalt bekannt. Bei den Anschlüssen kann es sich um Eingänge oder Ausgänge handeln. Die Leitungen können aus Metall und/oder aus Kunststoff bestehen und können starr oder flexibel sein. Die Schraubelemente können die Form von hohlen Bolzen oder Schraubmuffen haben oder als Hülsenmuttern ausgebildet werden. Auch werden Schraubelemente zur Befestigung von elektrischen Leitungen an elektrischen Geräten verwendet. Solche Schraubelemente haben häufig die Form von hohlen Schraubbolzen, die ein ringförmiges Dicht- und/oder Klemmelement für die Leitung sowie die durch das Dichtelement hindurchgeführte Leitung umfassen.

Insbesondere auf dem Gebiet der analytischen, präparativen oder industriellen Chromatographie und auf dem Gebiet der medizinischen Diagnostik und Laborgeräte im Allgemeinen werden häufig relativ dünne, aber teilweise im Betrieb unter hohem Druck stehende Schläuche aus Kunststoff mittels Schraubelementen aus Kunststoff an die entsprechenden Geräte, beispielsweise an HPLC- MPLC oder LPLC-Geräte bzw. Chromatographiesäulen angeschlossen. Dabei können eine erhebliche Zahl von Leitungen an ein Gerät angeschlossen werden. Es kommt immer wieder vor, dass die Zugänglichkeit der Schraubelemente aufgrund der beengten Platzverhältnisse schwierig ist. Dabei kann es durchaus vorkommen, dass entsprechende Schraubelemente nur immer über kleine Winkelbereiche gedreht werden können. Unter diesen Umständen ist es auch schwierig dafür Sorge zu tragen, dass die Schraubelemente ausreichend fest angezogen sind, jedoch nicht so fest, dass das Gewinde des Schraubelements, das häufig aus Kunststoff besteht, beschädigt wird oder so fest, dass die Abdichtung des Kunststoffschlauches nicht mehr gewährleistet ist, sei es durch Verformung oder Beschädigung des Schlauches und/oder einer vorgesehenen Dichtung.

Ferner besteht ein Problem mit Schraubelementen dahingehend, dass man aufgrund der beengten Platzverhältnisse bestrebt ist, die Schraubelemente selbst immer kleiner zu machen. Da die Leitungen, die durch die Schraubelemente hindurchgeführt werden, einen bedeutenden Flächenbereich des Stirnendes des Schraubelements einnehmen und nicht immer kleiner gemacht werden können, ist der verfügbare Platz für die Anbringung des Anziehwerkzeugs sehr beschränkt. Das Problem ist in manchen Fällen noch ausgeprägter, wenn Knickschutze für die flexiblen Leitungen vorgesehen sind, beispielsweise solche in Form von Drahtspiralen, da auch Platz für diese Elemente vorgesehen werden muss. Darüber hinaus ist es aufgrund der beengten Platzverhältnisse häufig schwierig, ein Anziehwerkzeug an die Schraubelemente anzusetzen.

Die WO 87/00352 zeigt ein Anziehwerkzeug gemäß des Oberbegriffs des Anspruchs 1. Die Druckschrift US 2006/0068623 A1 zeigt ein weiteres Anziehwerkzeug welches zum Stand der Technik gehört. Die GB 1 458 090, sowie US 5,378,101 zeigen verschiedene Schraubelemente aus dem Stand der Technik.

Die Aufgabe der vorliegenden Erfindung liegt darin, ein Anziehwerkzeug sowie ein Kopplungsteil und ein Schraubelement der eingangs genannten Art vorzusehen, das ein zuverlässiges Anziehen solcher Schraubelemente auch bei beengten Platzverhältnissen ermöglicht sowie leicht zu handhaben ist. Ferner besteht die Aufgabe, ein Schraubelement so auszugestalten, dass es trotz beengter Platzverhältnisse zuverlässig arbeitet und angezogen werden kann und zugleich die Anbringung des Anziehwerkzeugs erleichtert.

Zur Lösung dieser Aufgaben werden ein Anziehwerkzeug gemäß Anspruch 1 und ein Schraubelement gemäß Anspruch 9 vorgesehen.

Somit kommt erfindungsgemäß ein Anziehwerkzeug für ein Schraubelement mit einer Werkzeugaufnahme und einer zugeordneten Leitung zur Anwendung, das sich dadurch auszeichnet, dass ein Kopplungsteil vorgesehen ist, das an einem freien Ende zum formschlüssigen Eingriff mit der Werkzeugaufnahme ausgebildet ist und am anderen Ende, seinem Antriebsende, in einen Handgriff übergeht oder mit einem Handgriff koppelbar ist und dass das Kopplungsteil mindestens an seinem freien Ende einen Innenraum und mindestens eine seitliche Öffnung zur Einführung bzw. Herausführung der Leitung aufweist, wobei der Innenraum und die Öffnung sich bis zum freien Ende erstrecken und dort offen sind.

Durch die Ausbildung des Kopplungsteils kann das Anziehwerkzeug über die Leitung und in Eingriff mit der Werkzeugaufnahme gebracht werden, wobei der Innenraum des Kopplungsteils so groß bemessen sein muss, dass die Leitung darin Platz hat, d.h. der Querschnitt des Innenraums muss größer sein als der Querschnitt der Leitung. Die seitliche Öffnung ermöglicht einerseits eine seitliche oder radiale Bewegung des Kopplungsteils an die Leitung heran und anschließend eine axiale Bewegung des Kopplungsteils bzw. des Anziehwerkzeugs bis das freie Ende des Kopplungsteils in den formschlüssigen Eingriff mit der Werkzeugaufnahme gelangt. Dabei hat das freie Ende des Kopplungsteils eine Form in etwa komplementär zu der der Werkzeugaufnahme, damit ein Drehmoment über das Kopplungsteil an das Schraubelement übertragen werden kann. Die Leitung läuft beim angesetzten Anziehwerkzeug vom Schraubelement axial durch den hohlen Innenraum des Kopplungsteils und in gebogener Form seitlich durch die genannte Öffnung aus dem Kopplungsteil heraus.

Wenn es sich um eine flexible Leitung wie einen Schlauch aus Kunststoff handelt, was im Regelfall vorkommt, reicht die Flexibilität der Leitung aus, um die oben angegebene gebogene Form der Leitung bei der Herausführung aus dem Kopplungsteil heraus zu bilden und ermöglicht darüber hinaus eine begrenzte Drehbewegung des Kopplungsteils und daher des Schraubelements, ohne die Leitung zu beschädigen. Sollte es sich um eine starre Leitung, beispielsweise aus Metall handeln, dann muss die genannte Öffnung länger sein als der Abstand vom Schraubelement zu der dem Schraubelement abgewandten Seite der Biegung der Leitung und muss mindestens an der Stelle der Herausführung der Leitung breit genug ausgebildet werden, dass eine begrenzte Drehbewegung des Kopplungsteils bzw. des Anziehwerkzeugs zum Festziehen des Schraubelements möglich ist. Nach einer begrenzten Drehbewegung des Kopplungsteils bzw. des Anziehwerkzeugs kann dieses falls erforderlich axial von der Werkzeugaufnahme des Schraubelements entfernt um einen maximal möglichen begrenzten Betrag zurückgedreht und neu angesetzt, wobei eine weitere begrenzte Drehbewegung des Schraubelements möglich ist. Dieses Verfahren kann wiederholt werden, bis das Schraubelement festgezogen ist. Wenn der verfügbare Platz es zulässt, kann das Schraubelement mit den Fingern eingeschraubt werden, und es wird dann mittels des Anziehwerkzeuges anschließend festgezogen. Hierfür kann, je nach den tatsächlichen Umständen, eine einzige Drehbewegung des Anziehwerkzeuges in einem begrenzten Winkelbereich ausreichend sein, d.h. ohne das Anziehwerkzeug neu ansetzen zu müssen. Da das Kopplungsteil relativ schmal, jedoch ausreichend lang ausgebildet sein kann, kann das freie Ende des Kopplungsteils auch bei beengten Platzverhältnissen zum Festziehen von Schraubelementen benützt werden, die sonst unzugänglich wären.

Obwohl das Werkzeug als Anziehwerkzeug bezeichnet ist, kann es ohne weiteres auch zum Lösen von Schraubelementen verwendet werden.

Besonders günstig ist es, wenn das Anziehwerkzeug als Drehmomentschlüssel ausgebildet ist.

Hierdurch ist es möglich, die entsprechenden Schraubelemente mit einem maximal vorgebbaren Drehmoment anzuziehen, was wiederum dazu führt, dass die erforderliche Abdichtung der Leitung gewährleistet ist und das Gewinde nicht beschädigt wird. Ferner stellt die Einhaltung eines vorgegebenen Drehmomentes sicher, dass speziell bei PTFE- und FEP-Leitungen der Anpressdruck nicht so hoch wird, und dass ein unerwünschtes Fließen des Schlauchmaterials eintritt. Ferner wird mittels der Drehmomentbegrenzung das Drehmoment mit dem der Fitting (das Schraubelement) angezogen wird begrenzt, wodurch das Zusammendrucken des Flansches, des Stützrings (falls vorhanden) und gegebenenfalls eines zwischen Fitting und Stützring oder sonst wo vorgesehenen O-Rings begrenzt, d.h. ein übermäßiges Zusammendrücken verhindert wird.

Erfindungsgemäß ist es vorgesehen, dass das freie Ende des Kopplungsteils mit sich in axialer Richtung des Kopplungsteils erstreckenden Vorsprüngen versehen ist, die formschlüssig in die die Werkzeugaufnahme bildenden Längsnuten des Schraubelements eingreifen. Solche Längsnuten sind vorzugsweise an der Außenseite des Schraubelements ausgebildet und in der Richtung nach radial außen offen. Dies bedeutet, dass das Kopplungsteil im Bereich des Schraubelements nicht breiter sein muss als das Schraubelement selbst, was das Ansetzen des Anziehwerkzeugs auch bei besonders beengten Platzverhältnissen begünstigt.

Es ist allerdings nicht zwingend erforderlich, dass die Längsnuten nach radial außen offen sind. Stattdessen könnten sie beispielsweise durch achsparallele Bohrungen ersetzt werden, obwohl dies für die Zugänglichkeit nicht so günstig ist wie die Ausbildung mit Längsnuten, die nach radial Außen offen sind oder wenigstens bedeutet, dass das Schraubelement im Bereich dessen Kopfes größer ausgebildet sein muss als bei der Ausbildung mit Längsnuten, die nach radial außen offen sind.

Bei den erfindungsgemäßen Anziehwerkzeugen sind die Vorsprünge freistehend ausgebildet, was besonders günstig ist, um das Anziehwerkzeug auf das Schraubelement ansetzen zu können. Ferner führt die Verwendung von freistehenden Vorsprüngen dazu, dass das Anziehwerkzeug, insbesondere bei der Verwendung von Einlaufschrägen zu den genannten Längsnuten oder mit gerundeten Enden der Vorsprünge, sich leicht in Eingriff mit dem Kopfteil der Schraube bringen bzw. "einfädeln" lässt, und zwar auch dann, wenn die Sichtverhältnisse aufgrund der Anwesenheit von mehreren Schraub-elementen und bei beengten Platzverhältnissen nicht optimal sind und/oder wenn das Anziehwerkzeug mit einer nicht optimalen Orientierung an das jeweilige Schraubelement herangeführt wird.

Gemäß einer bevorzugten Ausführungsform ist das Kopplungsteil an seinem dem freien Ende abgewandten Ende mit einer Steckaufnahme für den Handgriff ausgebildet.

Das Anziehwerkzeug kann so ausgebildet werden, dass der Handgriff als Schraubenzieherhandgriff oder als Ratsche realisiert wird. In beiden Fällen kann der Handgriff mit eingebautem Drehmoment mit vorgebender oder begrenzender Funktion ausgebildet werden.

Die Öffnung erstreckt sich vorzugsweise über einen Großteil der Länge des Kopplungsteils bzw. über die Gesamtlänge desselben. Dies hat den Vorteil, dass für eine gegebene Flexibilität der Leitung die größtmögliche Drehbewegung des Anziehwerkzeugs erreicht werden kann, bevor es neu angesetzt werden muss.

Erfindungsgemäß weisen die Vorsprünge außerdem eine kreiszylindrische Form auf. Gemäß einer bevorzugten Ausführungsform werden sie außerdem durch Zylinderstifte gebildet, die mit einem Presssitz durch Klebstoff oder anderweitig in ringförmig angeordnete und sich in axialer Richtung erstreckende Bohrungen am zugeordneten freien Ende gehalten werden.

Diese Konstruktion kann herstellungstechnisch relativ leicht realisiert werden, da die Stifte durch Drahtelemente und die Bohrungen mit kleinen Bohrern in der erforderlichen Qualität und mit den erforderlichen Toleranzen angefertigt werden können. Die Schwierigkeiten, die bei dieser Herstellung herrschen, können nachvollzogen werden, wenn man zur Kenntnis nimmt, dass die Abmessungen der Vorsprünge bzw. Zylinderstifte bei den üblichen Verschraubungen im analytischen Bereich Durchmesser von unter 1 mm und um etwa 6mm aus dem freien Ende des Kopplungsteils hervorragen.

In einer weiteren bevorzugten Ausführungsform erstreckt sich ein Steg zwischen dem freien, dem Handgriff zugewandten Ende und dem freien, die Vorsprünge tragenden Ende, wobei die Winkelerstreckung des Steges um die Längsachse herum kleiner ist als die Winkelerstreckung der Öffnung um die Längsachse und vorzugsweise im Bereich von ≤ 120° und insbesondere von ≤ 90° liegt. Der Steg wird vorzugsweise möglichst klein gehalten. Er muss lediglich imstande sein, das maximal erforderliche Drehmoment zuverlässig zwischen den freien Enden des Kopplungsteils zu übertragen. Dadurch, dass dem Steg eine möglichst kleine Winkelerstreckung gegeben wird, kann die Öffnung im Bereich zwischen den freien Enden möglichst groß ausgeführt werden, wodurch ein möglichst großer Drehbereich des Anziehwerkzeugs bei kleinstmöglicher Behinderung durch die jeweilige Leitung erzielt werden kann. Obwohl der Steg eine möglichst kleine Winkelerstreckung um die mittlere Längsachse des Kopplungsteils herum aufweist, kann er in die radiale Richtung eine gewisse Dicke aufweisen, die zu der Höhe des übertragbaren Drehmoments beiträgt, ohne dass die radiale Dicke selbst eine Behinderung bei der Anwendung des Anziehwerkzeugs darstellt.

In einer anderen bevorzugten Ausführungsform weist die Öffnung in einem Bereich zwischen dem Handgriff und dem die Vorsprünge tragenden freien Ende eine größere Erstreckung auf als im Bereich dieses freien Endes.

In noch einer anderen bevorzugten Ausführungsform ist das dem Handgriff abgewandte freie Ende als Ring mit schlitzförmiger Öffnung ausgebildet und die schlitzförmige Öffnung weist eine Winkelerstreckung bzw. eine Breite auf, die kleiner ist als die Winkelerstreckung des Ringes bzw. der Umfang des Ringes. Konkret wird die schlitzförmige Öffnung gerade so breit bemessen bzw. mit einer Winkelerstreckung versehen, dass die jeweilige Leitung gerade durch die schlitzförmige Öffnung hindurch gefädelt werden kann.

Dies erleichtert einerseits die Anbringung des Anziehwerkzeugs, da es auf der Leitung entfernt vom Kopfteil des Schraubelements angebracht und dann entlang der Leitung zum Kopfteil des Schraubelements geführt werden kann, ohne dass die Gefahr besteht, dass das Anziehwerkzeug außer Eingriff mit der Leitung gerät. Es entsteht somit eine bessere Führung des Anziehwerkzeuges. Andererseits dient die kleine Breite der schlitzförmigen Öffnung dazu, dass der Umfang des Ringes möglichst lang ist und daher, dass möglichst viele sich axial erstreckende Vorsprünge an der freien Stirnseite des Ringes vorgesehen werden können. Auf jeden Fall gelingt es auf diese Weise, ausreichend viele Vorsprünge vorzusehen, dass sie in mehreren Längsnuten im Umfang des Kopfteils des Schraubelements eingreifen und sozusagen von dem Kopfteil der Schraube nicht seitlich außer Eingriff gelangen. Üblicherweise weist die schlitzförmige Öffnung eine Winkelerstreckung von ca. 90° auf, während der Ring eine Winkelerstreckung von ca. 270° aufweist.

Vorzugsweise erstreckt sich der Handgriff in axialer Richtung von dem Kopplungsteil. Es entsteht hierdurch ein relativ schmales längliches Anziehwerkzeug, das im Bereich der entsprechenden Geräte und Anschlüsse leicht handzuhaben ist.

In einer bevorzugten Ausführungsform ist das Kopplungsteil als Spritzgussteil in Kunststoff oder Metall oder als Strangpressteil in Kunststoff oder Metall ausgebildet, vorzugsweise in einer Aluminiumlegierung. Somit lässt sich ein Kopplungsteil kostengünstig, einfach und schnell herstellen.

In einer weiteren bevorzugten Ausführungsform ist das Kopplungsteil an seinem Antriebsende mit einer gleichartigen Anordnung von sich in axialer Richtung erstreckenden, radial nach innen ragenden Vorsprüngen wie am freien Ende ausgebildet, die mit einem eine komplementäre Form aufweisenden Antriebsende eines Handgriffs und/oder Drehmomentschlüssels koppelbar ist.

In einer anderen bevorzugten Ausführungsform ist bei Ausbildung des Kopplungsteils als Strangpressteil die Anordnung der Vorsprünge und die Wanddicke des Rohrstückes so gewählt, dass eine hohle Vierkant- oder Sechskantform oder eine Torxform am Antriebsende herstellbar ist, die mit einem komplementären Vierkant-, Sechskant- oder Torxelement gekoppelt werden kann.

Ein nicht zur Erfindung gehörendes Beispiel ist auch ein Kopplungsteil, das zur Anwendung bei einem Anziehwerkzeug der beschriebenen Art ausgebildet ist. Solche Kopplungsteile können nicht nur getrennt vom Handgriff bzw. vom Drehmomentbegrenzer verkauft werden, sondern es können verschiedene Kopplungsteile für verschiedene Schraubelementgrößen mit einem für alle Kopplungsteile passenden Handgriff verkauft bzw. verwendet werden.

Ein weiterer Aspekt der Erfindung betrifft ein Schraubelement mit einem Kopfteil, der für den Eingriff eines Werkzeuges ausgebildet ist, einen Gewindezylinder tragenden Schafteil und eine mittlere Bohrung, die zur Aufnahme einer flexiblen Leitung ausgebildet ist. Erfindungsgemäß ist der Kopfteil an seiner Außenseite mit sich in Längsrichtung von einem Stirnende des Kopfteils erstreckenden Längsnuten versehen, die im Querschnitt halbkreisförmig sind, und am genannten Stirnende sind Einlaufbereiche für die Längsnuten vorgesehen, die sich in Richtung der Längsnuten verjüngen, und zwar vorzugsweise konusförmig verjüngen, wobei das Schraubelement entweder als hohler Schraubbolzen oder als Hülsenmutter ausgebildet ist.

Das Vorsehen solcher Längsnuten ist besonders günstig, da durch den Eingriff des Anziehwerkzeuges auf der Außenseite des Kopfteils möglichst viel Platz für die Leitung und einen eventuell vorgesehenen Knickschutz geschaffen wird, ohne dass der Durchmesser des Kopfteils unnötig groß gemacht werden muss.

In einer Ausführungsform ist das Schraubelement als hohle Madenschraube ausgebildet und die Längsnuten sind in einem den Kopfteil bildenden Bereich der Madenschraube angeordnet. Solch eine Madenschraube benötigt an ihrem Kopfteil keinen Platz, der über die Gewindebohrung hinausgeht.

Solche Schraubelemente können mit einer Ausnehmung zwischen dem Kopfteil und dem Gewindezylinder versehen sein, die insbesondere dazu ausgebildet ist, einen Kodierring oder ähnliches aufzunehmen. Solche bevorzugt farblich kodierte Kodierringe ermöglichen ein einfacheres Einführen von Schraubelementen, z.B. in einem Gehäuse, wenn der Installationsort mit der gleichen Farbe kodiert ist.

Bevorzugt wird ein solches Schraubelement als ein Spritzgussteil in Kunststoff oder Metall gefertigt bzw. als (Dreh-) Automatenteil hergestellt. Besonders bevorzugte Ausführungsformen der Erfindung sind in den Ansprüchen definiert.

Die Erfindung wird nachfolgend anhand von Ausführungsbeispiele unter Bezugnahme auf die Zeichnung näher erläutert, in der zeigen:
- Fig. 1A: eine Seitenansicht eines erfindungsgemäßen Kopplungsteils mit einem erfindungsgemäßen Schraubelement vor dem Ansetzen des Kopplungsteils,
- Fig. 1B: das Kopplungsteil der Fig. 1A nach dem Ansetzen an das Schraubelement
- Fig. 1C: eine Darstellung entsprechend der Fig. 1B, jedoch zu einem kleineren Maßstab und komplementiert mit einem Handgriff und einer Leitung,
- Fig. 1D: eine weitere Darstellung ähnlich der Fig. IC, jedoch um 90° im Uhrzeigersinn gedreht.

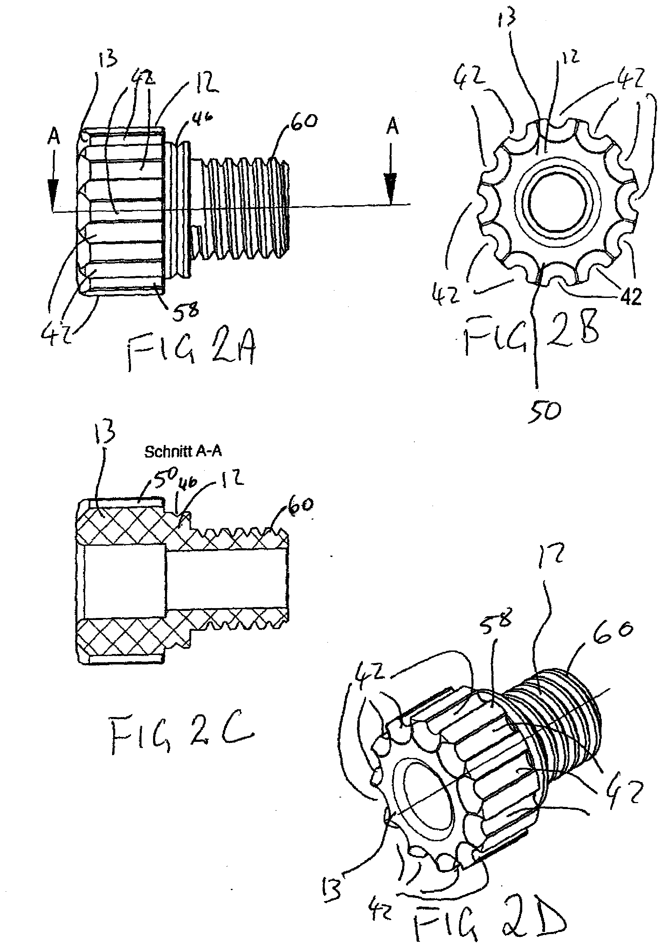

- Fig. 2A-2D: verschiedene Ansichten eines erfindungsgemäßen Schraubelements von der Seite (Fig. 2A), in Stirnansicht (Fig. 2B), in Längsrichtung geschnitten (Fig. 2C) und in einer perspektivischen Darstellung (Fig. 2D),
- Fig. 3A-3F: verschiedene Ansichten eines erfindungsgemäßen Kopplungsteils von der Seite (Fig. 3A), in Stirnansicht (Fig. 3B), in einer Seitenansicht (Fig. 3C) gemäß dem Pfeil IIIC der Fig. 1A sowie in zwei perspektivischen Darstellungen (Fig. 3D und 3E) und in einer weiteren Stirnansicht (Fig. 3F),
- Fig. 4A: eine teilweise geschnittene Darstellung eines Schraubelements bei der Einführung in eine Gewindeanschlussbohrung eines Gehäuses, wobei der Handgriff zwecks vereinfachter Darstellung fortgelassen wurde,
- Fig. 4B: eine vergrößerte Darstellung des in den Anschluss eingeschraubten Schraubelements,
- Fig. 5A -5F: weitere Ansichten eines weiteren Anziehwerkzeuges ähnlich der Figuren 1A bis 1D, wobei jedoch die Öffnung des erfindungsgemäßen Kopplungsteils wesentlich breiter ausgeführt ist,
- Fig. 6A+6B: zeigen ein weiteres Schraubelement in einer perspektivischen Ansicht und einer Stirnansicht,
- Fig. 7A +7B: zeigen ein weiteres Kopplungsteil in einer perspektivischen Ansicht und in einer Stirnansicht, und
- Fig. 8A bis 8C: zeigen ein weiteres Kopplungsteil ähnlich der Fig. 7A und 7B.

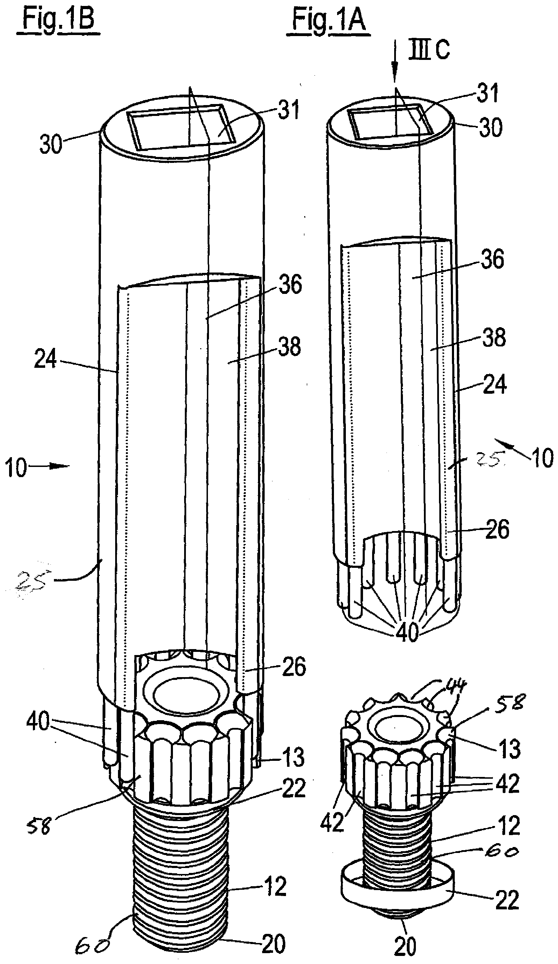

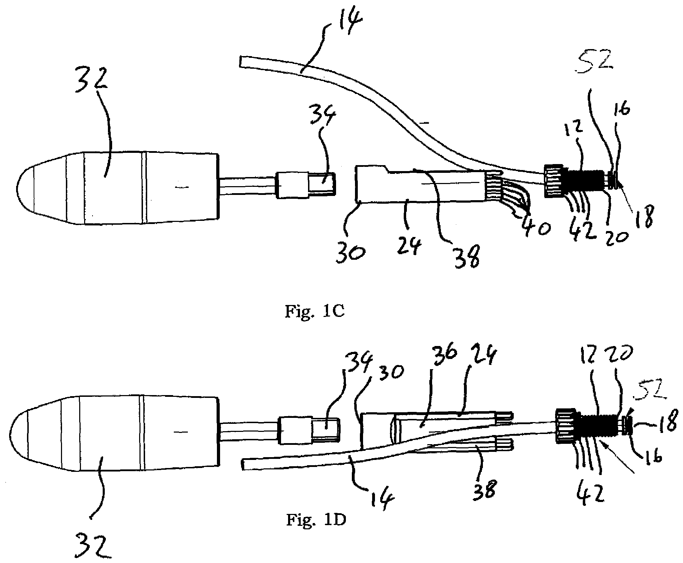

Bezugnehmend auf die Fig. 1A bis 1D, aber zugleich auch auf die weiteren Figuren, zeigen die Fig. 1C und 1D ein erfindungsgemäßes Anziehwerkzeug 10 für ein Schraubelement 12 einer Werkzeugaufnahme 13 und einer zugeordneten Leitung 14. Die Leitung 14 besteht hier aus Kunststoff und ist am dem Schraubelement 12 zugewandten Ende 16 mit einem Flansch 18 vorgesehen, der üblicherweise durch Umformen bzw. Verpressung des abgeschnittenen Endes der Leitung 14 im geheizten Zustand erzeugt wird. Bei dem Anschrauben des Schraubelements 12 in einen Anschluss eines Gehäuses in einem Verbindungstück wird der Flansch zwischen einem Stützring (nicht gezeigt) an der Stirnseite 20 des Schraubelements 12 und einer Schulter am Ende einer Gewindebohrung des (nicht gezeigten) Anschlusses gefangen. Das Bezugszeichen 22 in Fig. 1A deutet auf einen an sich bekannten farblichen Kodierring, der in einer Ringnut bzw. auf einer Ringschulter des Schraubelements 12 auf der dem Gewinde zugewandten Seite des Kopfes des Schraubelements 12 sitzt.

Das Bezugszeichen 24 stellt ein Kopplungsteil dar, das an seinem freien dem Schraubelement 12 zugewandten Ende 26 (Fig. 1B und 1C) zum formschlüssigen Eingriff mit einer Werkzeugaufnahme 13 des Schraubelements 12 ausgebildet ist. An seinem anderen Ende 30 weist das Kopplungsteil 24 eine Aufnahme, hier in Form einer im Querschnitt vierkantigen Öffnung 31, für einen Handgriff 32 auf, der mit einer entsprechenden komplementären Formgebung, beispielsweise einem herkömmlichen Vierkant 34 in das Ende 30 des Kopplungsteils eingesteckt werden kann. Das Kopplungsteil ist also in diesem Beispiel mit dem Handgriff 32 koppelbar. Gegebenenfalls kann das entsprechende "Ende" des Kopplungsteils 24 in den Handgriff 32 übergehen, d.h. mit diesem fest gekoppelt sein.

Mit anderen Worten ist das Kopplungsteil an seinem dem freien Ende 26 abgewandten Ende 30 mit einer Steckaufnahme für den Handgriff 32 ausgebildet und der Handgriff 32 kann als Schraubenzieherhandgriff oder als Ratsche ausgebildet werden. In beiden Fällen kann der Handgriff mit einer eingebauten das Anziehdrehmoment vorgebender oder begrenzender Funktion ausgebildet sein.

Das Kopplungsteil 24 weist ferner mindestens an seinem bzw. im Bereich seines freien Ende(s) 26 einen Innenraum 36 und mindestens eine seitliche Öffnung 38 zur Einführung bzw. Herausführung der Leitung 14 auf, wobei der Innenraum 36 und die Öffnung 38 sich bis zum freien Ende 26 erstrecken und dort offen sind.

Der Handgriff 32 ist vorzugsweise als Drehmomentschlüssel ausgebildet. Solche Handgriffe 32 mit der gezeigten Form eines Schraubenziehergriffes sind im Handel von der Firma Wika erhältlich. Stattdessen kann ein herkömmlicher Drehmomentschlüssel mit Vierkant mit dem erfindungsgemäßen Kopplungsteil 24 verwendet werden.

Das freie Ende 26 des Kopplungsteils 24 ist mit sich in axialer Richtung des Kopplungsteils erstreckenden freistehenden Vorsprüngen 40 versehen, die formschlüssig in die Werkzeugaufnahme 13 bildende Längsnuten 42 des Schraubelements 12 bzw. im Schraubenkopf des Schraubelements eingreifen. Die Längsnuten 42 sind an der Außenseite des Schraubelements 12 ausgebildet und in der Richtung nach radial außen offen. An ihren dem Kopplungsteil 24 zugewandten Enden weisen die Längsnuten 42 konusförmige Einlaufbereiche auf, die das Einführen der Vorsprünge 40 des Kopplungsteils 24 ermöglichen.

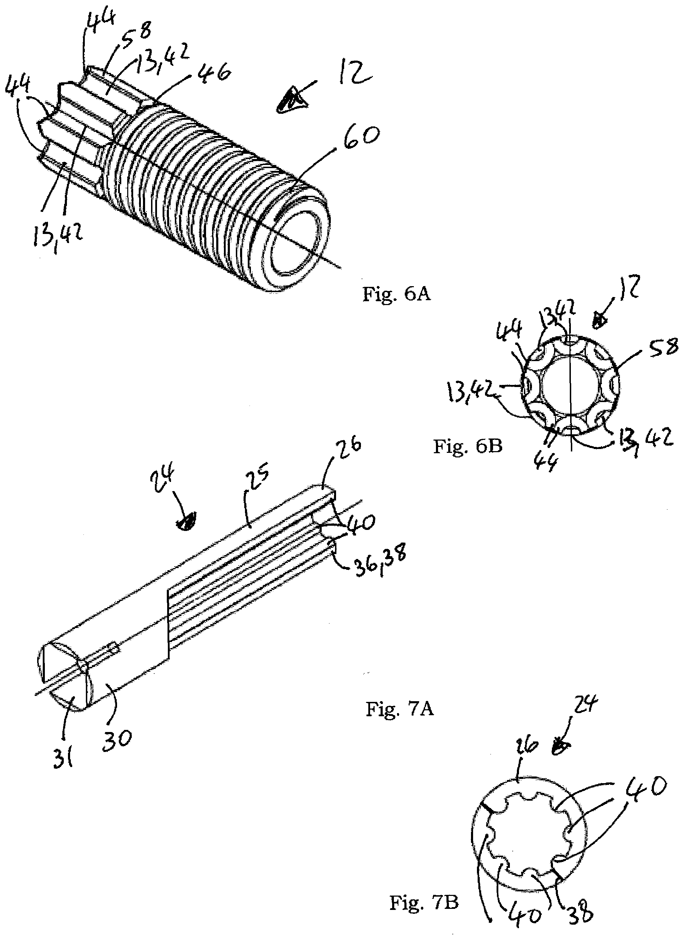

Die Vorsprünge 40 weisen eine kreiszylindrische Form (siehe Fig. 6) auf, so dass diese beim Einführen in die Längsnuten 42 des Schraubelements 12 besonders effizient durch die konusförmige Form der Einlaufbereiche 44 des Schraubelements 12 geführt werden können. Dadurch wird gewährleistet, dass sich die Vorsprünge 40 ihren Weg in die Längsnuten 42 selbst suchen können, so dass das Kopplungsteil 24 ohne viel Aufwand in Eingriff mit dem Schraubelement 12 gebracht werden kann. Somit wird ein relativ einfaches Festschrauben bzw. Lockern des Schraubelements 12 mittels des Kopplungsteils 24 gewährleistet. Dies ist besonders vorteilhaft, wenn das Schraubelement 12 in relativ kleinen Geräten, wo wenig Platz vorhanden ist, angebracht werden muss.

Insbesondere aus der Fig. 1C ist ersichtlich, dass die Öffnung 38 sich über einen Großteil der Länge des Kopplungsteils 24 bzw. beinahe über die Gesamtlänge desselben erstreckt. Fig. 1D zeigt eine weitere Darstellung ähnlich der Fig. IC, bei der jedoch das Kopplungsteil um 90° im Uhrzeigersinn gedreht worden ist.

Bei der Benutzung des Anziehwerkzeugs werden der Handgriff 32 und das Kopplungsteil normalerweise erst zusammengesteckt, d.h. der Vierkant des Handgriffs 32 ist in der Steckaufnahme 31 des Kopplungsteils 24 eingesteckt. Danach wird das Kopplungsteil 24 seitlich über die Leitung 14 bewegt, damit diese in etwa die Position gemäß Fig. 1A annimmt. Erst dann wird das Anziehwerkzeug axial in Bezug auf die mittlere Längsachse des Schraubelements 12 und der Leitung 14 im Bereich des Schraubelements 12 bewegt, damit die Vorsprünge 40 in die Längsnuten 42 des Schraubelements 12 eingreifen (vgl. Fig. 1C). Danach kann ein Drehmoment auf den Handgriff 32 und über das Kopplungsteil 24 auf das Schraubelement 12 ausgeübt werden. Es kann allerdings das Kopplungsteil 24 erst auf die Leitung 14 platziert und dann in Eingriff mit dem Schraubelement 12 gebracht werden, bevor der Handgriff 32 in das Kopplungsteil 24 eingesteckt wird.

Der Innenraum 36 des Kopplungsteils 24 ist so groß bemessen, dass die Leitung 14 darin Platz hat, d.h. der Querschnitt des Innenraums 36 muss größer sein als der Querschnitt der Leitung 14 und der Durchmesser des zylindrischen Innenraums 36 ist vorzugsweise mindestens zwei oder dreimal so groß wie der Außendurchmesser der Leitung 14. Die seitliche Öffnung 38 ermöglicht einerseits eine seitliche oder radiale Bewegung des Kopplungsteils 24 an die Leitung 14 heran und anschließend eine axiale Bewegung des Kopplungsteils 24 bzw. des Anziehwerkzeugs 10 bis das freie Ende 26 des Kopplungsteils 24 in den formschlüssigen Eingriff mit der Werkzeugaufnahme 13 des Schraubelements 12 gelangt. Dabei hat das freie Ende 26 des Kopplungsteils bzw. die dort vorgesehenen Vorsprünge 40 eine Form in etwa komplementär zu der der Werkzeugaufnahme 13, damit ein Drehmoment vom Handgriff 32 über das Kopplungsteil 24 an das Schraubelement 14 übertragen werden kann.

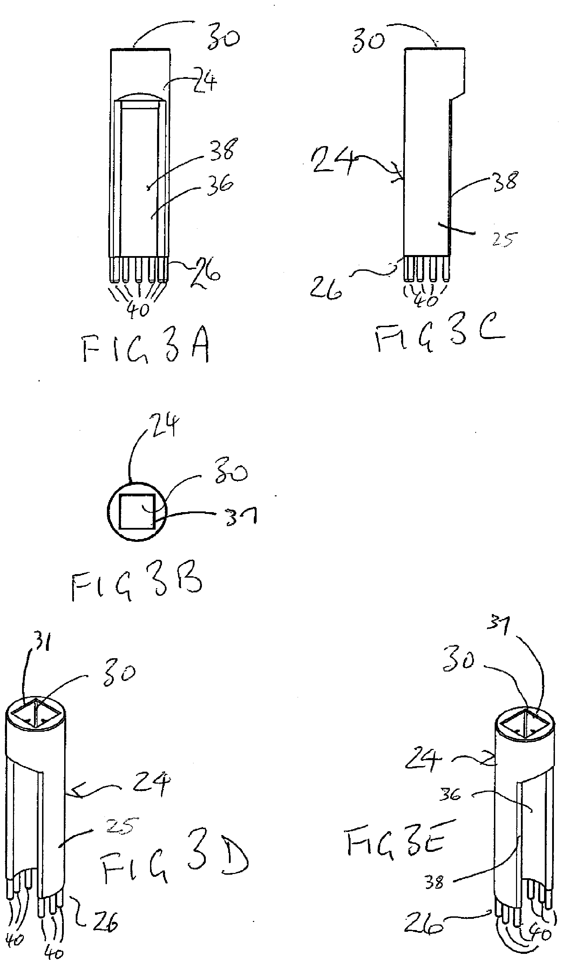

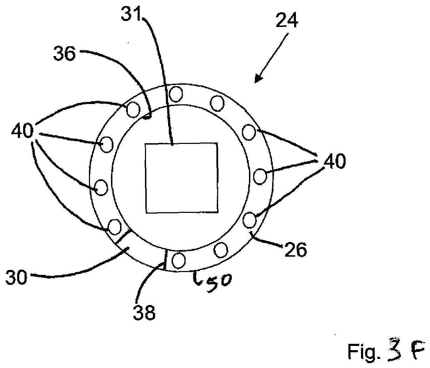

Fig. 3F zeigt eine weitere Stirnansicht eines Kopplungsteils 24 gemäß Fig. 3A bis 3E. In dieser ist der kreisrunde Querschnitt der kreiszylindrischen Vorsprünge 40 zu sehen. Die Vorsprünge 40 werden vorzugsweise durch Zylinderstifte gebildet, die mit einem Presssitz durch Klebstoff oder anderweitig in ringförmig angeordnete und sich in axialer Richtung erstreckende Bohrungen am zugeordneten freien Ende gehalten werden. Diese Konstruktion kann herstellungstechnisch relativ leicht realisiert werden, da die Stifte durch Drahtelemente und die Bohrungen mit kleinen Bohrern in der erforderlichen Qualität und mit den erforderlichen Toleranzen angefertigt werden können.

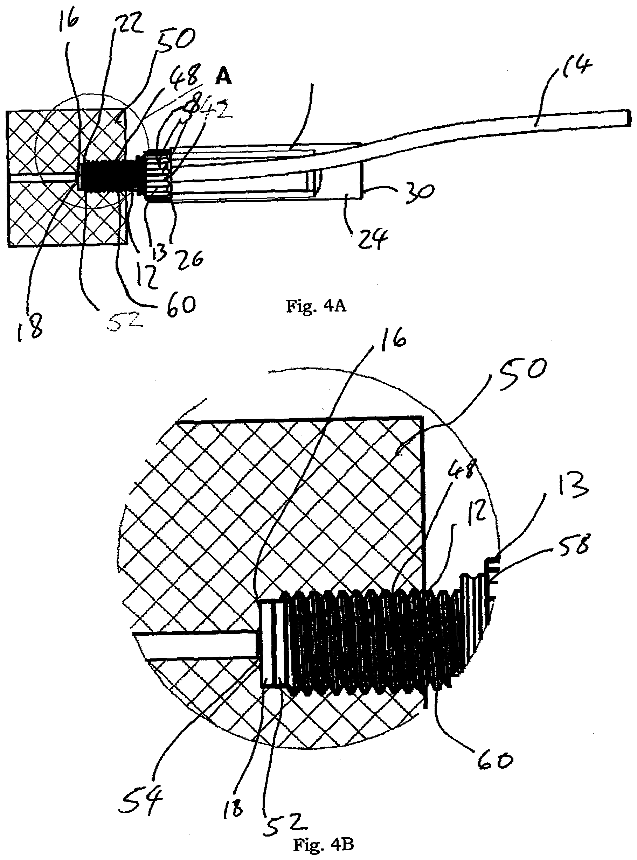

In der Fig. 4A wird eine teilweise geschnittene Darstellung eines Schraubelements 12 bei der Einführung in eine Gewindeanschlussbohrung 48 eines Gehäuses 50 gezeigt, wobei der Handgriff 32 in der Darstellung fortgelassen wurde. Die Fig. 4B zeigt eine vergrößerte Darstellung des in den Anschluss 48 eingeschraubten Schraubelements 12. Die Fig. 4B zeigt ferner, wie beim eingeschraubten Schraubelement 12 dessen Stirnseite 20 gegen einen Stützring 52 und über diesen an den Flansch 18 der Leitung 14 drückt und den Flansch an den Boden 54 der Gewindebohrung 48 presst.

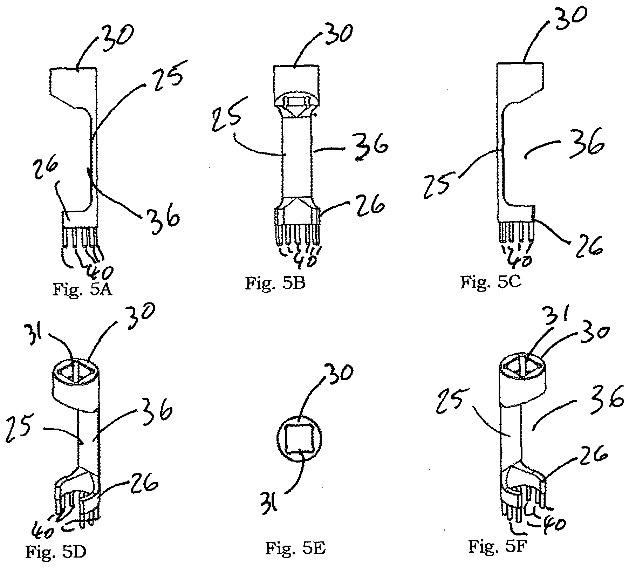

Die Fig. 5A bis 5F zeigt ein alternatives Kopplungsteils 24, bei dem die Öffnung 36 eine erhebliche Breite aufweist, die sich über ca. 270° des Umfanges des Kopplungsteils 24 erstreckt (wobei diese Winkelangabe rein beispielhaft und nicht einschränkend verstanden werden soll). Demgemäß verbleibt ein relativ enger Steg 25, der das freie Antriebsende 26 mit dem handgriffseitigen Ende 30 verbindet. Somit kann das Anziehwerkzeug über einen erweiterten Winkelbereich gedreht werden, um eine entsprechend große winkelmäßige Anziehbewegung des Schraubelements 12 zu bewirken. Schließlich soll darauf hingewiesen werden, dass die Öffnung 36 eine andere Form aufweisen könnte, beispielsweise eine T-Form, wobei die Öffnung im Bereich des Antriebsendes 26 beispielsweise schmäler und im Bereich des handgriffseitigen Endes 30 breiter ist.

Die Breite des Steges 25 wird so gewählt, dass die Übertragung eines Drehmoments über das Kopplungsteil 24 an das Schraubelement 12 gewährleistet wird. Typischerweise werden bei Kunststoffschrauben 12 Drehmomente im Bereich von 0.05 bis 2 Nm, insbesondere von 0,1 bis 1 Nm, je nach Größe des Schraubelements verwendet. Bei Metallschrauben 12 kann ein Drehmoment von ca. 0,1 bis 120 Nm, bevorzugt zwischen 2 und 50 Nm, je nach Metall und Größe, mittels des Kopplungsteils 24 an das Schraubelement übertragen werden.

Fig. 6A und 6B zeigen ein weiteres Schraubelement 12 in einer perspektivischen Ansicht und einer Stirnansicht. In dieser Ausführungsform ist das Schraubelement 12 als hohle Madenschraube ausgebildet und die Längsnuten 42 sind in einem den Kopfteil 58 bildenden Bereich der Madenschraube 12 angeordnet. Solch eine Madenschraube 12 benötigt an ihrem Kopfteil 58 keinen Platz, der über die Gewindebohrung hinausgeht. Das Schraubelement 12 hat einen Kopfteil 58, der für den Eingriff eines Werkzeuges (siehe Fig. 1 z.B.) ausgebildet ist, einen Gewindezylinder 60 tragenden Schafteil und eine mittlere Bohrung, die zur Aufnahme einer flexiblen Leitung 14 ausgebildet ist.

Die Längsnuten 42, die an der Außenseite des Kopfteils 58 vorgesehen sind, sind im Querschnitt halbkreisförmig und am Stirnende, dem Gewindezylinder 60 entfernten Ende, sind Einlaufbereiche 44 für die Längsnuten 42 vorgesehen, die sich in Richtung der Längsnuten 42 verjüngen, und zwar vorzugsweise konusförmig verjüngen. Dieses Vorsehen der Längsnuten 42 im Kopfteil 58 ermöglicht den Eingriff des Anziehwerkzeuges 24 auf der Außenseite des Kopfteils 58, ohne dass der Durchmesser des Kopfteils unnötig groß gemacht werden muss.

Eine Ausnehmung 46 ist zwischen dem Kopfteil 58 und dem Gewindezylinder 60 des Schraubelements 12 angeordnet, die insbesondere dazu ausgebildet ist, einen Kodierring 22 oder ähnliches aufzunehmen. Solche bevorzugt farblich kodierte Kodierringe ermöglichen ein einfacheres Einführen von Schraubelementen 12, z.B. in einem Gehäuse, wenn der Installationsort mit der gleichen Farbe kodiert ist (siehe z.B. Fig 4A und 4B). Bevorzugt wird ein solches Schraubelement 12 als ein Spritzgussteil in Kunststoff oder Metall gefertigt bzw. als (Dreh-) Automatenteil hergestellt.

Fig. 7A und 7B zeigen eine weitere Ansicht eines Kopplungsteils 24. Insbesondere zeigt die Fig, 7A eine perspektivische Ansicht. Auch hier erstreckt sich ein Steg 25 zwischen dem Antriebsende 30 und dem freien, die Vorsprünge 40 tragenden Ende 26. Die Winkelerstreckung des Steges 25 um die Längsachse herum ist kleiner als die Winkelerstreckung der Öffnung 38 um die Längsachse.

Das Kopplungsteil 24 der Fig. 7A und 7B ist aus einem Strangpressteil gefertigt worden, vorzugsweise aus einer Aluminiumlegierung. Solche Strangpressteile können sehr einfach, schnell und kostengünstig hergestellt werden. Danach werden Sie auf ihre gewünschte Länge zugeschnitten und mit ihrer Öffnung 38 versehen. In dem, dem Handgriff abgewandten freien Ende 26, wird im Ring 56 eine schlitzförmige Öffnung 38 ausgebildet, die eine Winkelerstreckung bzw. eine Breite aufweist, die kleiner ist als die Winkelerstreckung des Ringes 56 bzw. der Umfang des Ringes 56. Konkret wird in allen Ausführungsformen die schlitzförmige Öffnung 38 mindestens gerade so breit bemessen bzw. mit einer Winkelerstreckung versehen, dass die jeweilige Leitung 14 gerade durch die schlitzförmige Öffnung 38 hindurch gefädelt werden kann. Somit lässt sich ein Kopplungsteil 24 kostengünstig, einfach und schnell herstellen.

Wie der Fig. 7B zu entnehmen ist, erstrecken sich in axialer Richtung radial nach innen ragende Vorsprünge 40, die mit einem eine komplementäre Form 31 aufweisenden Antriebsende 30 eines Handgriffs und/oder Drehmomentschlüssels koppelbar ist. In dem vorliegenden Beispiel ist die Anordnung der Vorsprünge 40 und die Wanddicke des Rohrstückes so gewählt, dass eine hohle Vierkantform 31 (siehe Fig. 7A) am Antriebsende 30 herstellbar ist, die mit einem komplementären Vierkantelement gekoppelt werden kann. Es könnte eine andere Form am bzw. in dem Antriebsende 30 hergestellt werden, einschließlich eines Außenvierkants oder eine andere geeignete Antriebsform.

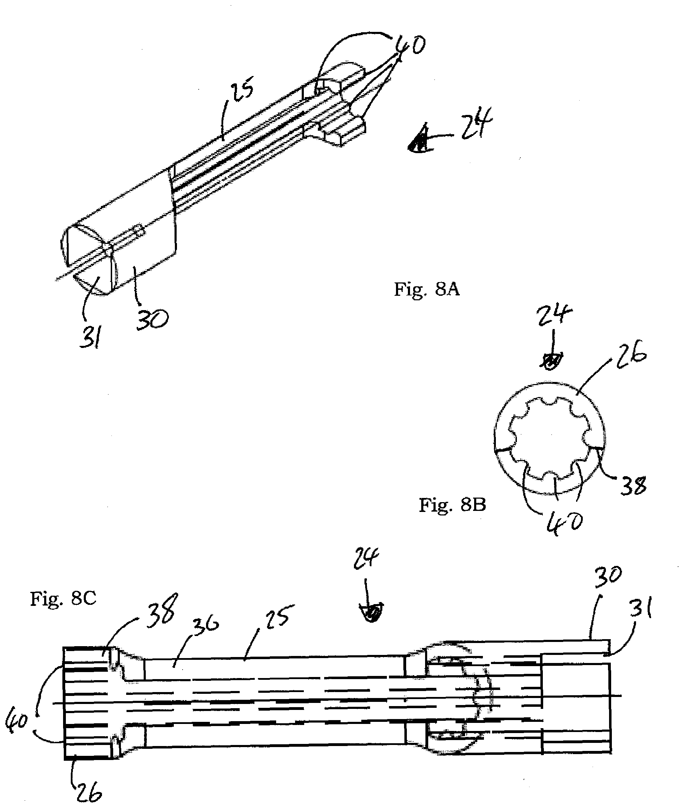

Die Fig. 8A bis 8C zeigen ein Kopplungsteil ähnlich der Fig. 7A und 7B. Der wesentliche Unterschied ist darin zu sehen, dass der Ringabschnitt 56 am freien Ende 26 eine größere Winkelerstreckung, d.h. Umfangslänge aufweist und somit den Schraubenkopf besser umgreift. Ein weitere Unterschied liegt in der Breite des Steges 25. In diesem Beispiel ist deutlich mehr von der Seitenwand weggefräst bzw. herausgeschnitten oder fortgelassen, so dass der Steg 25 eine deutlich geringere Winkelerstreckung aufweist als die des weggefrästen oder fortgelassenen Bereiches.

Auch in diesem Beispiel weist das Kopplungsteil 24 im Allgemeinen die Form eines Rohrstückes auf, das in Seitenansicht einer langestreckte U-Form hat.

Die hier gezeigten Schraubelement können als gängige Schraubelemente 12 in den Größen, z.B. M4, M5 M6, M7, M8, M9 oder M10, oder auch als dementsprechende Zoll Größen gefertigt werden. Die Schraubelemente 12 können aber auch Spezialgefertigte Größen aufweisen, die einer jeweiligen Gewindeanschlussbohrung 48 angepasst sind.

## Patentansprüche

1. Anziehwerkzeug (10) für ein Schraubelement (12) mit einer Werkzeugaufnahme (13) und einer zugeordneten Leitung (14), die aus der Mitte des Schraubelements heraustritt,
wobei ein Kopplungsteil (24) vorgesehen ist, das an einem freien Ende (26) zum formschlüssigen Eingriff mit der Werkzeugaufnahme (13) ausgebildet ist und am anderen Antriebsende (30) in einen Handgriff (32) übergeht oder mit einem Handgriff (32) koppelbar ist und wobei das Kopplungsteil (24) mindestens an seinem freien Ende (26) einen Innenraum (36) bzw. Ausschnitt und mindestens eine seitliche Öffnung (38) zur Einführung bzw. Herausführung der Leitung (14) aufweist, wobei der Innenraum (36) bzw. Ausschnitt und die Öffnung (38) sich bis zum freien Ende (26) erstrecken und dort offen sind, wobei das freie Ende (26) des Kopplungsteils (24) mit sich in axialer Richtung des Kopplungsteils (24) erstreckenden Vorsprüngen (40) versehen ist, die formschlüssig in die Werkzeugaufnahme (13) bildenden Längsnuten (42) des Schraubelements (12) eingreifen, die an der Außenseite des Schraubelements (12) ausgebildet sind und in der Richtung nach radial außen offen sind, **dadurch gekennzeichnet, dass**
die Vorsprünge (40) freistehend sind, und
dass die Vorsprünge (40) eine kreiszylindrische Form aufweisen.

2. Anziehwerkzeug (10) nach Anspruch 1,
**dadurch gekennzeichnet, dass** die Vorsprünge (40) durch Zylinderstifte gebildet sind, die mit einem Presssitz durch Klebstoff oder anderweitig in ringförmig angeordnete und in axialer Richtung erstreckende Bohrungen am zugeordneten freien Ende (26) gehalten sind.

3. Anziehwerkzeug (10) nach Anspruch 1 oder 2,
**dadurch gekennzeichnet, dass** es als Drehmomentschlüssel ausgebildet ist.

4. Anziehwerkzeug (10) nach einem der vorhergehenden Ansprüche, **dadurch gekennzeichnet, dass** die sich in axialer Richtung erstreckenden Vorsprünge (40) durch Nasen gebildet sind, die radial nach innen von der Wand eines Rohrstückes in den Innenraum hineinragen.

5. Anziehwerkzeug (10) nach einem der vorhergehenden Ansprüche, **dadurch gekennzeichnet, dass** das Kopplungsteil (24) als Spritzgussteil in Kunststoff oder Metall oder als Strangpressteil in Kunststoff oder Metall ausgebildet ist, beispielsweise in einer Aluminiumlegierung, und/oder dass das Kopplungsteil (24) an seinem Antriebsende (30) mit einer gleichartigen Anordnung von sich in axialer Richtung erstreckenden, radial nach innen ragenden Vorsprüngen wie am freien Ende (26) ausgebildet ist, die mit einem eine komplementäre Form aufweisenden Antriebsende eines Handgriffs und/oder Drehmomentschlüssels koppelbar ist, und/oder dass bei Ausbildung des Kopplungsteils (24) als Strangpressteil die Anordnung der Vorsprünge (40) und die Wanddicke des Rohrstückes so gewählt sind, dass eine hohle Vierkant- oder Sechskantform oder eine Torxform am Antriebsende (30) herstellbar ist, die mit einem komplementären Vierkant-, Sechskant- oder Torxelement koppelbar ist.

6. Anziehwerkzeug (10) nach einem der vorhergehenden Ansprüche, **dadurch gekennzeichnet, dass** sich ein Steg (25) zwischen dem Antriebsende (30) und dem freien die Vorsprünge (40) tragenden Ende (26) des Kopplungsteils (24) erstreckt, wobei die Winkelerstreckung des Steges (25) um die Längsachse herum kleiner ist als die Winkelerstreckung der Öffnung (36) um die Längsachse und vorzugsweise im Bereich von ≤ 120° und insbesondere von ≤ 90° liegt.

7. Anziehwerkzeug (10) nach einem der vorhergehenden Ansprüche, **dadurch gekennzeichnet, dass** die Öffnung (38) in einem Bereich zwischen dem Handgriff und dem die Vorsprünge (40) tragenden freien Ende (26) eine größere Erstreckung aufweist als im Bereich dieses freien Endes (26), und/oder dass das dem Handgriff abgewandte freie Ende (26) als Ring (56) mit schlitzförmiger Öffnung ausgebildet ist und die schlitzförmige Öffnung eine Winkelerstreckung bzw. eine Breite aufweist, die kleiner ist als die Winkelerstreckung des Ringes (56), und/oder dass die Öffnung (38) sich über einen Großteil der Länge des Kopplungsteils (24) bzw. über die Gesamtlänge desselben erstreckt, und/oder dass die Vorsprünge (40) sich axial vom Ring weg bzw. im Ring erstrecken.

8. Anziehwerkzeug (10) nach einem der vorhergehenden Ansprüche, **dadurch gekennzeichnet, dass** das Kopplungsteil (24) an seinem dem freien Ende (26) abgewandten Ende (30) mit einer Steckaufnahme (31) für den Handgriff (32) ausgebildet ist, und/oder dass der Handgriff (32) als Schraubenzieherhandgriff oder als Ratsche ggf. mit eingebauter das Anziehdrehmoment vorgebender oder begrenzender Funktion ausgebildet ist, und/oder dass sich der Handgriff (32) in axialer Richtung von dem Kopplungsteil (24) erstreckt.

9. Schraubelement (12) mit einem Kopfteil (58), der für den Eingriff eines Werkzeuges ausgebildet ist, einem Gewindezylinder (60) und mit einer mittleren Bohrung, die zur Aufnahme einer Leitung (14) ausgebildet ist, **dadurch gekennzeichnet, dass** das Kopfteil (58) an seiner Außenseite mit sich in Längsrichtung von einem Stirnende des Kopfteils (58) erstreckenden Längsnuten (42) versehen ist, die im Querschnitt etwa halbkreisförmig sind, und dass am genannten Stirnende Einlaufbereiche (44) für die Längsnuten (42) vorgesehen sind, die sich in Richtung der Längsnuten (42) verjüngen, vorzugsweise konusförmig verjüngen, wobei das Schraubelement (12) entweder als hohler Schraubbolzen oder als Hülsenmutter ausgebildet ist.

10. Schraubelement (12) nach Anspruch 9, **dadurch gekennzeichnet, dass** dieses als hohle Madenschraube (12) ausgebildet ist, und die Längsnuten (42) in einem den Kopfteil (58) bildenden Bereich der Madenschraube angeordnet sind.

11. Schraubelement (12) nach Anspruch 9 oder 10, **dadurch gekennzeichnet, dass** die Schraube (12) bzw. die Madenschraube über ihre Länge einen zumindest im wesentlichen konstanten Außendurchmesser aufweist.

12. Schraubelement (12) nach einem der Ansprüche 9 bis 11, **dadurch gekennzeichnet, dass** zwischen dem Kopfteil (12) und dem Gewindezylinder (60) eine Ausnehmung (46) vorgesehen ist, die insbesondere dazu ausgebildet ist, einen Kodierring (22) oder ähnliches aufzunehmen.

13. Schraubelement (12) nach einem der Ansprüche 9 bis 12, **dadurch gekennzeichnet, dass** das Schraubelement (12) aus einem Spritzgussteil in Kunststoff oder Metall oder als (Dreh-) Automatenteil ausgebildet ist.

## Claims

1. A fastening tool (10) for a screw element (12) having a tool mount (13) and an associated line (14) which exits from the center of the screw element,
wherein a coupling part (24) is provided which is configured for a shape matching engagement with the tool mount (13) at a free end (26) and which merges into a handle (32) or can be coupled to a handle (32) at the other end, the drive end (30), and wherein the coupling part (24) has, at least at its free end (26), an inner space (36) and/or a cutout and at least one lateral opening (38) for the introduction and/or removal of the line (14); wherein the inner space (36) and/or the cutout and the opening (38) extend up to the free end (26) and are open there; wherein the free end (26) of the coupling part (24) is provided with projections (40) extending in an axial direction of the coupling part (24) and engaging into longitudinal grooves (42) of the screw element (12) in a shape matching manner, said longitudinal grooves (42) forming the tool mount (13) and being formed at an outer side of the screw element (12) and being open in the direction facing radially outwardly,
**characterized in that**
the projections (40) are free-standing; and
**in that** the projections (40) have a circular cylindrical shape.

2. A fastening tool (10) in accordance with claim 1,
**characterized in that** the projections (40) are formed by cylinder pins which are held with a press fit in annularly arranged bores extending in the axial direction at the associated free end (26) by means of an adhesive or are held in a different manner in annularly arranged bores extending in the axial direction at the associated free end (26).

3. A fastening tool (10) in accordance with claim 1 or claim 2,
**characterized in that** it is configured as a torque wrench.

4. A fastening tool (10) in accordance with any one of the preceding claims,
**characterized in that** the projections (40) extending in the axial direction are formed by noses which project radially inwardly into the inner space from a wall of a tubular piece.

5. A fastening tool (10) in accordance with any one of the preceding claims, **characterized in that** the coupling part (24) is made as a plastic or a metal injection molded part or as a plastic or a metal extruded part, for example a part made of an aluminum alloy; and/or **in that** the coupling part (24) is configured with a similar arrangement of projections extending in the axial direction and projecting radially inwardly at its drive end (30), as at the free end (26), which arrangement of projections can be coupled to a drive end of a handle and/or of a torque wrench having a complementary shape; and/or **in that**, on the formation of the coupling part (24) as an extruded part, the arrangement of the projections (40) and the wall thickness of the tubular piece are selected in such a way that a hollow square shape or hexagonal shape or a torx shape can be produced at the drive end (30) and can be coupled to a complementary square element, octagonal element or torx element.

6. A fastening tool (10) in accordance with any one of the preceding claims, **characterized in that** a web (25) extends between the drive end (30) and the free end (26) of the coupling part (24) bearing the projections (40), with the angular extent of the web (25) being smaller about the longitudinal axis than the angular extent of the opening (36) about the longitudinal axis and preferably lies in a range of ≤ 120° and, in particular of ≤ 90°.

7. A fastening tool (10) in accordance with any one of the preceding claims, **characterized in that** the opening (38) has a larger extent in a region between the handle and the free end (26) bearing the projections (40) than in the region of this free end (26); and/or **in that** the free end (26) facing away from the handle is configured as a ring (56) having a slot-like opening and the slot-like opening has an angular extent and/or a width which is smaller than the angular extent of the ring (56); and/or **in that** the opening (38) extends over a large part of the length of the coupling part (24) and/or over the total length of the same; and/or **in that** the projections (40) extend axially away from the ring and/or in the ring.

8. A fastening tool (10) in accordance with any one of the preceding claims, **characterized in that** the coupling part (24) is configured with a socket receiver (31) for the handle (32) at its end (30) remote from the free end (26); and/or **in that** the handle (32) is configured as a screwdriver handle or as a ratchet possibly having an installed function predefining the fastening torque or limiting the fastening torque; and/or **in that** the handle (32) extends in the axial direction from the coupling part (24).

9. A screw element (12) having a head part (58) which is configured for the engagement of a tool, having a threaded cylinder (60) and having a central bore which is configured for the reception of a line (14), **characterized in that** the head part (58) is provided with longitudinal grooves (42) at its outer side extending in a longitudinal direction from an end face of the head part (58), said longitudinal grooves (42) being approximately semi-circular shaped in cross-section; and **in that** run-in regions (44) for the longitudinal grooves (42) are provided at the said end face and taper, preferably in a conical manner, in the direction of the longitudinal grooves (42), with the screw element (12) either being configured as a hollow screw bolt or as a sleeve nut.

10. A screw element (12) in accordance with claim 9, **characterized in that** it is configured as a hollow grub screw (12) and the longitudinal grooves (42) are arranged in a region of the grub screw forming the head part (58).

11. A screw element (12) in accordance with claim 9 or 10, **characterized in that** the screw (12) respectively the grub screw has an at least substantially constant outer diameter over its length.

12. A screw element (12) in accordance with any one of the claims 9 to 11, **characterized in that** a cutout (46) is provided between the head part (12) and the threaded cylinder (60) which is in particular configured to receive a coding ring (22) or the like.

13. A screw element (12) in accordance with any one of the claims 9 to 12, **characterized in that** the screw element (12) is made as a plastic or a metal injection molded part or as a (turned) automated part.

## Revendications

1. Outil de serrage (10) pour un élément à visser (12), comportant un logement à outil (13) et un conduit associé (14) qui sort du centre de l'élément à visser,
dans lequel
il est prévu une partie d'accouplement (24) qui, à une extrémité libre (26), est réalisé pour un engagement par coopération de forme avec le logement à outil (13) et qui, à l'autre extrémité d'entraînement (30), se transforme en une poignée (32) ou peut être accouplée à une poignée (32), et
la partie d'accouplement (24) présente, au moins à son extrémité libre (26), un espace intérieur (36) ou une découpe et au moins une ouverture latérale (38) pour l'introduction ou l'enlèvement du conduit (14),
l'espace intérieur (36) ou la découpe et l'ouverture (38) s'étendent jusqu'à l'extrémité libre (26) et y sont ouverts,
l'extrémité libre (26) de la partie d'accouplement (24) est pourvue de saillies (40) qui s'étendent dans la direction axiale de la partie d'accouplement (24) et qui s'engagent par coopération de forme dans des rainures longitudinales (42) de l'élément à visser (12) qui forment le logement à outil (13) et qui sont ménagées sur le côté extérieur de l'élément à visser (12) et sont ouvertes dans la direction radialement vers l'extérieur,
**caractérisé en ce que**
les saillies (40) sont dégagées, et **en ce que**
les saillies (40) ont une forme cylindrique à base circulaire.

2. Outil de serrage (10) selon la revendication 1,
**caractérisé en ce que**
les saillies (40) sont formées par des goupilles cylindriques qui sont maintenues avec ajustement serré par une colle ou autre dans des alésages disposés en forme annulaire et s'étendant axialement à l'extrémité libre associée (26).

3. Outil de serrage (10) selon la revendication 1 ou 2,
**caractérisé en ce que**
il est réalisé sous forme de clé dynamométrique.

4. Outil de serrage (10) selon l'une des revendications précédentes,
**caractérisé en ce que**
les saillies (40) s'étendant dans la direction axiale sont formées par des ergots qui font saillie radialement vers l'intérieur à partir de la paroi d'un tronçon de tube jusque dans l'espace intérieur.

5. Outil de serrage (10) selon l'une des revendications précédentes,
**caractérisé en ce que**
la partie d'accouplement (24) est réalisée comme pièce moulée par injection en matière plastique ou en métal ou comme pièce extrudée en matière plastique ou en métal, par exemple en un alliage d'aluminium, et/ou **en ce que**
la partie d'accouplement (24) est réalisée, à son extrémité d'entraînement (30), avec un agencement de saillies s'étendant dans la direction axiale et faisant saillie radialement vers l'intérieur, agencement qui est de même type que celui à l'extrémité libre (26) et qui peut être accouplé à une extrémité d'entraînement d'une poignée et/ou d'une clé dynamométrique de forme complémentaire, et/ou **en ce que**
lorsque la partie d'accouplement (24) est réalisée comme pièce extrudée, l'agencement des saillies (40) et l'épaisseur de la paroi du tronçon de tube sont choisis de telle sorte qu'une forme creuse carrée ou hexagonale ou une forme torx peut être réalisée à l'extrémité d'entraînement (30), qui peut être accouplée à un élément complémentaire carré, hexagonal ou torx.

6. Outil de serrage (10) selon l'une des revendications précédentes,
**caractérisé en ce que**
une barrette (25) s'étend entre l'extrémité d'entraînement (30) et l'extrémité libre (26) de la partie d'accouplement (24) portant les saillies (40), l'extension angulaire de la barrette (25) autour de l'axe longitudinal étant inférieure à l'extension angulaire de l'ouverture (36) autour de l'axe longitudinal et étant de préférence dans la plage ≤ 120° et en particulier ≤ 90°.

7. Outil de serrage (10) selon l'une des revendications précédentes,
**caractérisé en ce que**
dans une zone située entre la poignée et l'extrémité libre (26) portant les saillies (40), l'ouverture (38) présente une plus grande extension que dans la zone de cette extrémité libre (26), et/ou **en ce que** l'extrémité libre (26) détournée de la poignée est réalisée sous forme d'anneau (56) ayant une ouverture en forme de fente, et l'ouverture en forme de fente présente une extension angulaire ou une largeur qui est inférieure à l'extension angulaire de l'anneau (56), et/ou **en ce que** l'ouverture (38) s'étend sur une majeure partie de la longueur de la partie d'accouplement (24) ou sur toute la longueur de celle-ci, et/ou **en ce que** les saillies (40) s'étendent axialement en s'éloignant de l'anneau ou dans ledit anneau.

8. Outil de serrage (10) selon l'une des revendications précédentes,
**caractérisé en ce que**
à son extrémité (30) détournée de l'extrémité libre (26), la partie d'accouplement (24) est réalisée avec un logement d'enfichage (31) pour la poignée (32), et/ou **en ce que**
la poignée (32) est réalisée sous forme de manche de tournevis ou de cliquet, le cas échéant avec une fonction intégrée qui détermine ou limite le couple de serrage, et/ou **en ce que**
la poignée (32) s'étend dans la direction axiale depuis la partie d'accouplement (24).

9. Élément à visser (12) comportant une partie de tête (58) réalisée pour l'engagement d'un outil, un cylindre fileté (60) et un alésage central réalisé pour recevoir un conduit (14),
**caractérisé en ce que**
sur son côté extérieur, la partie de tête (58) est pourvue de rainures longitudinales (42) qui s'étendent en direction longitudinale depuis une extrémité frontale de la partie de tête (58) et qui, en section transversale, sont approximativement en forme de demi-cercle, et **en ce que** à ladite extrémité frontale, des zones d'entrée (44) sont prévues pour les rainures longitudinales (42), qui vont en se rétrécissant en direction des rainures longitudinales (42), de préférence en se rétrécissant en forme conique, l'élément à visser (12) étant réalisé soit sous forme de boulon fileté creux soit sous forme d'écrou à douille.

10. Élément à visser (12) selon la revendication 9,
**caractérisé en ce que**
celui-ci est réalisé sous forme de vis sans tête creuse (12), et les rainures longitudinales (42) sont disposées dans une zone de la vis sans tête formant la partie de tête (58).

11. Élément à visser (12) selon la revendication 9 ou 10,
**caractérisé en ce que**
la vis (12) ou la vis sans tête présente un diamètre extérieur au moins sensiblement constant sur sa longueur.

12. Élément à visser (12) selon l'une des revendications 9 à 11,
**caractérisé en ce que**
un évidement (46) est prévu entre la partie de tête (12) et le cylindre fileté (60), qui est réalisé en particulier pour recevoir un anneau de codage (22) ou similaire.

13. Élément à visser (12) selon l'une des revendications 9 à 12,
**caractérisé en ce que**
l'élément à visser (12) est réalisé à partir d'une pièce moulée par injection en matière plastique ou en métal ou sous forme de pièce (de tour) automatique.
